# EUROPÄISCHE PATENTSCHRIFT

(11) **EP 2 266 196 B1**
(45) Veröffentlichungstag und Bekanntmachung des Hinweises auf die Patenterteilung: **13.01.2016**
(21) Anmeldenummer: 09731596.4
(22) Anmeldetag: 16.04.2009
(51) Int. Cl.: H02M 7/08, H02M 7/797, H02M 7/81

(54) **VERSORGUNGSEINHEIT FÜR ELEKTRISCHE ANTRIEBE UND VERFAHREN ZUR STEUERUNG DIESER VERSORGUNGSEINHEIT**
SUPPLY UNIT FOR ELECTRIC DRIVES, AND METHOD FOR CONTROLLING SAID SUPPLY UNIT
UNITE D' ALIMENTATION POUR MECANISMES D' ENTRAINEMENT ELECTRIQUES ET PROCEDE DE COMMANDE DE CETTE UNITE D' ALIMENTATION

(30) Priorität: 16.04.2008 DE 102008019294
(43) Veröffentlichungstag der Anmeldung: 29.12.2010
(73) Patentinhaber: Lenze Automation GmbH, 31855 Aerzen (DE)
(72) Erfinder: HAHN, Hartmut, 31789 Hameln (DE)
(74) Vertreter: Schober, Mirko
(86) Internationale Anmeldenummer: PCT/EP2009/002785
(87) Internationale Veröffentlichungsnummer: WO 2009/127412

(56) Entgegenhaltungen:
- DE-C1- 19 617 048
- US-A- 4 720 776
- BLASKO V: "Power conditions and control of a regenerative brake" INDUSTRY APPLICATIONS CONFERENCE, 1998. THIRTY-THIRD IAS ANNUAL MEETIN G. THE 1998 IEEE ST. LOUIS, MO, USA 12-15 OCT. 1998, NEW YORK, NY, USA,IEEE, US, Bd. 2, 12. Oktober 1998 (1998-10-12), Seiten 1504-1510, XP010313021 ISBN: 978-0-7803-4943-8
- DEREK A PAICE: "Multiple Paralleling of Power Diodes" IEEE TRANSACTIONS ON INDUSTRIAL ELECTRONICS AND CONTROLINSTRUMENTATION,, Bd. IECI-11, Nr. 2, 1. Mai 1975 (1975-05-01), Seiten 151-158, XP011178986 ISSN: 0018-9421

## Beschreibung

### Technisches Gebiet

Die Erfindung bezieht sich auf eine Versorgungseinheit gemäß den Merkmalen des Oberbegriffs des Patentanspruchs 1 sowie auf ein Verfahren zum Steuern dieser Versorgungseinheit nach den Merkmalen des Oberbegriffs des Patentanspruchs 6.

### Stand der Technik

Solche Versorgungseinheiten dienen in der Regel dazu, über den Gleichspannungszwischenkreis einen oder mehrere daran angeschlossene Antriebsumrichter mit Gleichspannung zu versorgen. Die im Motorbetrieb benötigte Antriebsleistung wird hierbei über die als Brückengleichrichter fungierenden Freilaufdioden des Netzwechselrichters übertragen. Im generatorischen Betrieb wird die über den Gleichspannungszwischenkreis aufgenommene Bremsleistung vom Netzwechselrichter in das Drehspannungsnetz zurückgespeist.

Es ist weiter bekannt, parallel zu einem in einen Frequenzumrichter integrierten Netzgleichrichter einen gesteuerten, vom Drehstromnetz geführten Wechselrichter als Zusatzeinheit anzuordnen, über die bei generatorisch arbeitender Last die Rückspeisung in das Drehspannungsnetz erfolgt. Die in dem Wechselrichter der Zusatzeinheit vorhandenen Freilaufdioden sind ausschließlich dafür vorgesehen, die elektronischen Schalter beim Ausschalten vor Überspannung zu schützen. Der Gleichspannungseingang des Wechselrichters ist mit Sperrdioden versehen, die eine Einspeisung vom Drehspannungsnetz in den Gleichspannungszwischenkreis über den Wechselrichter unterbinden. Zudem werden im Einspeisebetrieb die elektronischen Schalter des Rückspeise-Wechselrichters nicht gesperrt, was dazu führt, dass dieser Wechselrichter im Einspeisebetrieb nicht stromlos wird.

Sowohl die Druckschrift JP 59070185 A als auch die Druckschrift DE 196 17 048 C1 offenbaren jeweils eine Versorgungseinheit, die einen Netzgleichrichter sowie einen Netzwechselrichter umfasst, die zueinander parallel geschaltet sind. Die Versorgungseinheiten sind sowohl für den motorischen Betrieb als auch für den generatorischen Betrieb geeignet. Während die Druckschrift JP 59070185 A keine Aussage zu einem möglichen Steuerverfahren der Versorgungseinheiten macht, beschäftigt sich die Druckschrift DE 196 17 048 C1 mit einem Verfahren zur Energierückspeisung, bei dem die auf positivem Gleichspannungspotential liegenden elektronischen Schalter des Netzwechselrichters stromunabhängig im 120°-Blockbetrieb aufgesteuert werden, während die auf negativem Gleichspannungspotential liegenden elektronischen Schalter nur dann ausgesteuert werden, wenn die Zwischenkreisspannung durch Energierückspeisung auf einen voreingestellten ersten Ansprechwert ansteigt. Nachteilig an einem solchen Verfahren ist, dass zur Vermeidung parasitärer Kreisströme der Wechselrichter und der Gleichrichter direkt parallel geschaltet werden müssen. Bei direkter Parallelschaltung von Wechselrichter und Gleichrichter wird wiederum aufgrund der verschiedenen Durchlassspannungen der Dioden des Wechselrichters und des Gleichrichters der Strom im Einspeisebetrieb im Wesentlichen über den Gleichrichter eingespeist.

Eine gattungsgemäße Versorgungseinheit ist aus der Veröffentlichtung mit dem Titel "Power Conditions and Control of a Regenerative Brake" von V. Blasko, in Industry Applications Conference 1998, 1504-1510, bekannt.

Entscheidend bei den bekannten Versorgungseinheiten ist nämlich, dass das Verhältnis der zur Verfügung stehenden Leistung sowohl für den motorischen Betrieb bei Einspeisung in den Gleichspannungszwischenkreis als auch für den generatorischen Betrieb bei Rückspeisung in das Drehspannungsnetz gleich ist und daher jeweils maximal 100 % der Bemessungsleistung sowohl für den Einspeisebetrieb als auch für den Rückspeisebetrieb zur Verfügung stehen. Die Praxis zeigt jedoch, dass elektrische Antriebe im zyklischen Betrieb deutlich mehr motorische Leistung als generatorische benötigen, worauf die bekannten Versorgungseinheiten nicht abgestellt sind.

### Die Erfindung

Der Erfindung liegt deshalb die Aufgabe zugrunde, eine Versorgungseinheit und ein Steuerverfahren hierfür zu schaffen, mit denen im Vergleich zur generatorischen Leistung im Rückspeisebetrieb eine höhere motorische Leistung im Einspeisebetrieb übertragen werden kann. Weiterhin sollen Leistungsverluste durch parasitäre Kreisströme vermieden werden.

Diese Aufgabe wird mit einer Versorgungseinheit gemäß den Merkmalen des Patentanspruchs 1 und mit einem Verfahren zur Steuerung einer solchen Versorgungseinheit mit den Merkmalen des Patentanspruchs 6 gelöst.

Für die erfindungsgemäße Lösung ist wesentlich, im Einspeisebetrieb sowohl über den Netzgleichrichter, als auch über die Freilaufdioden des Netzwechselrichters Leistung in den Gleichspannungszwischenkreis einspeisen zu können. Mit der erfindungsgemäßen Lösung wird bezogen auf die Rückspeiseleistung somit mehr Einspeiseleistung zur Verfügung gestellt. Der Netzwechselrichter wird so gesteuert, dass er in Abhängigkeit von dem Verkauf der verketteten Spannungen des Drehspannungsnetzes einerseits und dem Verlauf der Zwischenkreisspannung andererseits seine elektronischen Schalter nur während bestimmter Intervalle öffnet, um die Ausbildung parasitärer Ströme zu vermeiden und die zur Verfügung stehende Leistung der verwendeten Leistungshalbleiter optimal zu nutzen.

Erfindungsgemäß werden die Symmetrierglieder so ausgelegt, dass im Einspeisebetrieb die netzseitig dem Gleichrichter und dem Wechselrichter jeweils zur Verfügung gestellte Leistung der Leistung entspricht, die der Gleichrichter und der Wechselrichter jeweils aufnehmen können. Demnach sind der komplexe Widerstand des Netzgleichrichter-Zweiges und der komplexe Widerstand des Netzwechselrichter-Zweiges so gewählt, dass eine Aufteilung des eingespeisten Stromes erfolgt.

Unter Vernachlässigung der in der Regel verschiedenen Dioden beziehungsweise Diodentypen des Netzgleichrichters und des Netzwechselrichters wird bei im Wesentlichen gleich dimensionierten Netzdrosseln als Symmetrierglieder sowohl am Netzeingang des Netzgleichrichters als auch am Netzausgang des Wechselrichters die Einspeiseleistung zu gleichen Teilen über den Netzgleichrichter und über den Netzwechselrichter übertragen, womit die zur Verfügung gestellte motorische Leistung 200 % der Bemessungsleistung des Gleichrichters oder des Wechselrichters beträgt und für die Rückspeisung im generatorischen Betrieb eine Wechselrichterleistung von 100 % zur Verfügung steht, unter der Voraussetzung, dass der Gleichrichter und der Wechselrichter dieselbe Leistung aufnehmen können. Eine weitere Erhöhung der Einspeiseleistung kann dadurch erreicht werden, dass weitere Netzgleichrichter mit passend dimensionierten Netzdrosseln zur Versorgungseinheit parallel geschaltet werden.

Für die Steuerung der Rückspeisung aus dem Gleichspannungszwischenkreis in das Drehspannungsnetz ist es von Bedeutung, die Zwischenkreisspannung und die verketteten Netzspannungen zu erfassen, um aus den Netzspannungsverläufen den Referenzwert zu ermitteln, der höher ist als der Wert der sich im Leerlauf einstellenden Zwischenkreisspannung. Damit liegt der Referenzwert höher als die Spannungsscheitelwerte der verketteten Spannungen im Drehspannungsnetz. Entsprechend der doppelten Anzahl der Phasen im Drehspannungsnetz werden die 360° der Netzspannungsperiode in gleiche Sektoren aufgeteilt. In jedem dieser Sektoren werden nur diejenigen elektronischen Schalter aktiviert, die denjenigen beiden Netzspannungsphasen zugeordnet sind, welche der Spannung im Zwischenkreis die maximal mögliche Gegenspannung zur Verfügung stellen. Da die Aktivierung der elektronischen Schalter entsprechend der Phasenlage der verketteten Spannungen des Drehspannungsnetzes wechselt und die jeweils zeitgleich aktivierten elektronischen Schalter zeitgleich ausgeschaltet werden, können sich parasitäre Ströme über den Netzgleichrichter-Netzwechselrichter-Kreis erst gär nicht ausbilden.

Weitere vorteilhafte Ausgestaltungsmerkmale ergeben sich aus den Unteransprüchen.

### Kurzbeschreibung der Zeichnungsabbildungen

Die Erfindung wird nachfolgend anhand der Zeichnung an einem Schaltungsbeispiel noch näher erörtert. Dabei zeigen:
- Fig. 1: den grundsätzlichen Schaltungsaufbau einer erfindungsgemäßen Versorgungseinheit,
- Fig. 2: den Schaltungsaufbau gemäß Figur 1 mit Hervorhebung der Strompfade im Einspeisebetrieb,
- Fig. 3: den Schaltungsaufbau nach Figur 1 mit Hervorhebung der Strompfade im Rückspeisebetrieb,
- Fig. 4: eine Gegenüberstellung der Spannungsverläufe in den Netzphasen eines 3-Phasen-Drehspannungsnetzes während einer Netzspannungsperiode (oben) und der Aktivierungsintervalle der elektronischen Schalter des Schaltungsaufbaus nach den Figuren 1 bis 3 (unten) in Abhängigkeit von den Spannungsverläufen und
- Fig. 5: eine Veranschaulichung der entstehenden parasitären Kreisströme bei nicht gleichzeitigem Ausschalten zweier elektronischer Schalter im Rückspeisebetrieb.

### Weg zur Ausführung der Erfindung

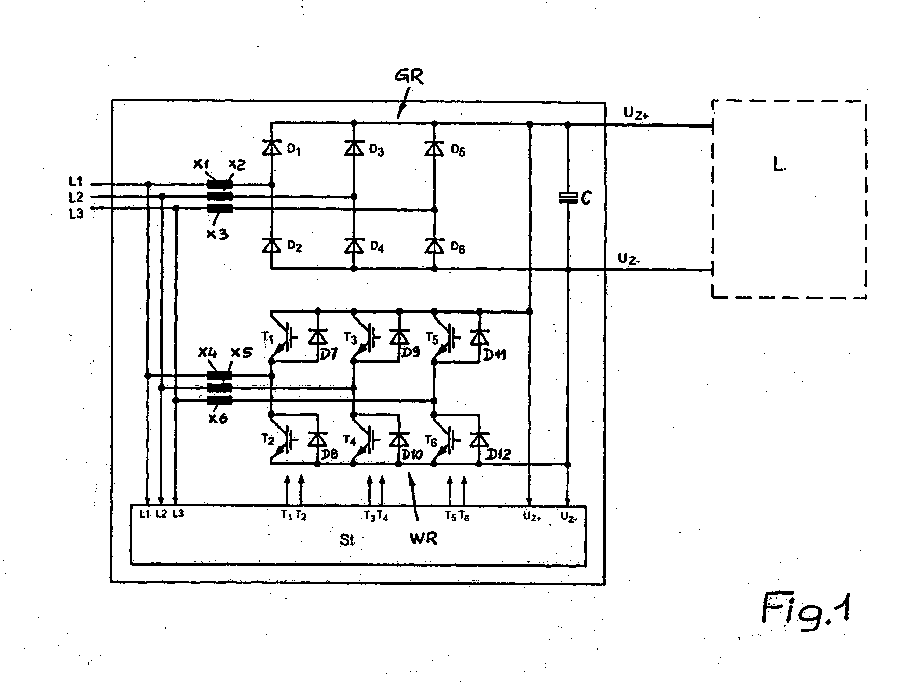

Im Einzelnen erkennt man in den Figuren 1 bis 3 einen Netz-Gleichrichter GR mit Dioden D1 - D6 in Brückenschaltung, der mit seinem Gleichspannungsausgang in einen Gleichspannungszwischenkreis mit den Spannungen U_{Z+} und U_{Z-} übergeht. Der Gleichspannungszwischenkreis ist kapazitiv ausgelegt und weist entsprechend einen Zwischenkreiskondensator C auf. Über den Gleichspannungszwischenkreis wird eine Last L versorgt, die sowohl motorisch betrieben werden als auch generatorisch arbeiten kann. Eingangsseitig ist der Gleichrichter GR über Symmetrierglieder X1 - X3 in Gestalt von Netzdrosseln an die 3 Phasen L1 - L3 eines Drehspannungsnetzes angeschlossen.

Parallel zum Gleichrichter GR liegt ein Netz-Wechselrichter WR mit elektronischen Schaltern T1 - T6, die als Isolated-Gate-Bi-polar-Transistor (IGBT) bezeichnet werden. Antiparallel zu jedem der elektronischen Schalter T1 - T6 sind Freilaufdioden D7 - D12 angeordnet, die in gleicher Weise wie die Dioden D1 - D6 des Gleichrichters einen Brückenaufbau aufweisen. Herkömmlich besitzen solche Freilaufdioden für einen Netzwechselrichter eine höhere Durchlassspannung, nämlich ca. 1,5 - 2,5V, als die Dioden eines Netzgleichrichters, nämlich 1 - 1,5V. Eingangsseitig liegt der Wechselrichter WR am Gleichspannungsausgang des Gleichrichters GR ohne Zwischenglieder, ausgangsseitig ist der Wechselrichter WR über Symmetrierglieder X4 - X6, bei denen es sich ebenfalls um Netzdrosseln handelt, mit dem Drehspannungsnetz verbunden.

Um eine Einspeisung gleichzeitig sowohl über den Netzgleichrichter als auch über den Netzwechselrichter zu ermöglichen, sind die netzseitigen Symmetrierglieder vorzuschalten. Denn bei direkter Parallelschaltung von Wechselrichter und Gleichrichter würde der Strom aufgrund der verschiedenen Durchlassspannungen der Dioden fast ausschließlich den Weg über den Netzgleichrichter wählen. Der komplexe Widerstand des Netzgleichrichter-Zweiges und der komplexe Widerstand des Netzwechselrichter-Zweiges werden daher so gewählt, dass eine Aufteilung des eingespeisten Stromes erfolgt, und zwar erfindungsgemäß derart, dass im Einspeisebetrieb die netzseitig dem Gleichrichter und dem Wechselrichter jeweils zur Verfügung gestellte Leistung der Leistung entspricht, die der Gleichrichter und der Wechselrichter jeweils aufnehmen können. Dabei ist die vom Gleichrichter und vom Wechselrichter aufnehmbare Leistung bevorzugt gleich. Dementsprechend weisen die Symmetrierglieder X1 - X3 des Gleichrichter GR und X4 - X6 des Wechselrichters WR vorzugsweise im Wesentlichen die gleichen Impedanzen auf.

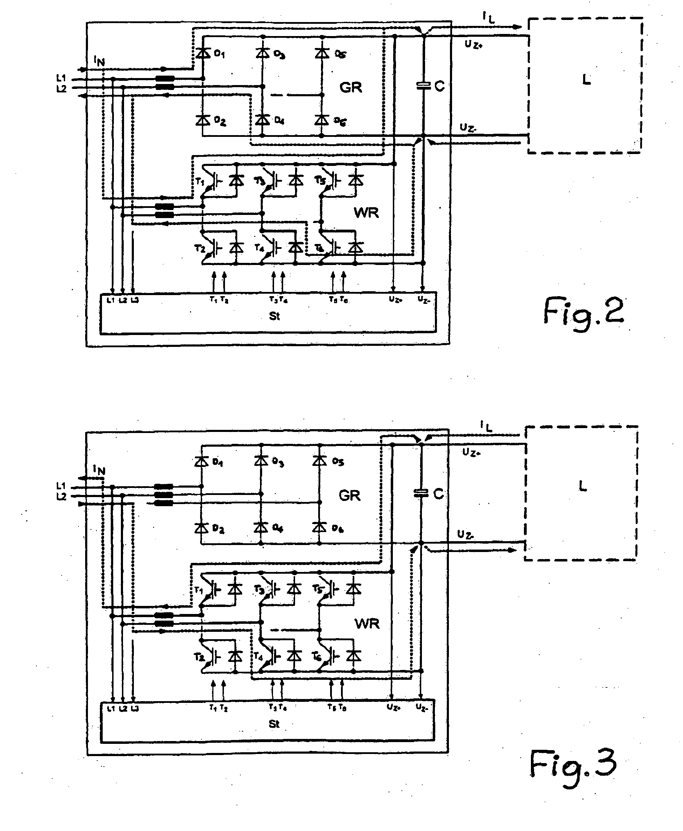

Die elektronischen Schalter T1 - T6 werden über ein Steuerteil St aktiviert, und zwar in einander abwechselnden Intervallen, wie nachstehend anhand von Figur 3 noch erläutert werden wird. Eine Signalverbindung des Steuerteils St mit dem Gleichspannungszwischenkreis dient zur Erfassung der Gleichspannung im Zwischenkreis. Ebenso besteht eine solche Verbindung des Steuerteils St mit den drei Netzphasen L1 - L3 des Drehspannungsnetzes, hierüber werden die Spannungsverläufe der verketteten Spannungen dieser Netzphasen L1 - L3 erfasst.

Die Besonderheit der Schaltungsanordnung von Figur 1 liegt darin, dass in den Fällen, in denen die Last L motorischer Leistung bedarf, die Einspeisung in den Gleichspannungszwischenkreis U_{Z+}, U_{Z-} sowohl über den Netz-Gleichrichter GR als auch über den Netz-Wechselrichter WR erfolgt, wobei beim Wechselrichter WR die Dioden D7 - D12 als Brückengleichrichter genutzt werden.

Figur 2 veranschaulicht die Strompfade, die der Netzstrom IN nimmt, wenn die Last dem Zwischenkreis Strom entnimmt und die Zwischenkreisspannung kleiner als die verkettete Spannung zwischen den Netzphasen L1 und L2 ist. Die gleich bemessenen Symmetrierglieder X1 - X3 des Gleichrichters GR und die Symmetrierglieder X4 - X6 des Wechselrichters WR sorgen dafür, dass die motorische Leistung zu gleichen Teilen über den Gleichrichter GR und die Freilaufdioden D7 - D12 des Wechselrichters WR der Last L zur Verfügung gestellt wird. Während des Einspeisebetriebs sind die elektronischen Schalter T1 - T6 des Wechselrichters WR nicht aktiviert, jeglicher Stromdurchgang durch die IGBTs ist somit gesperrt.

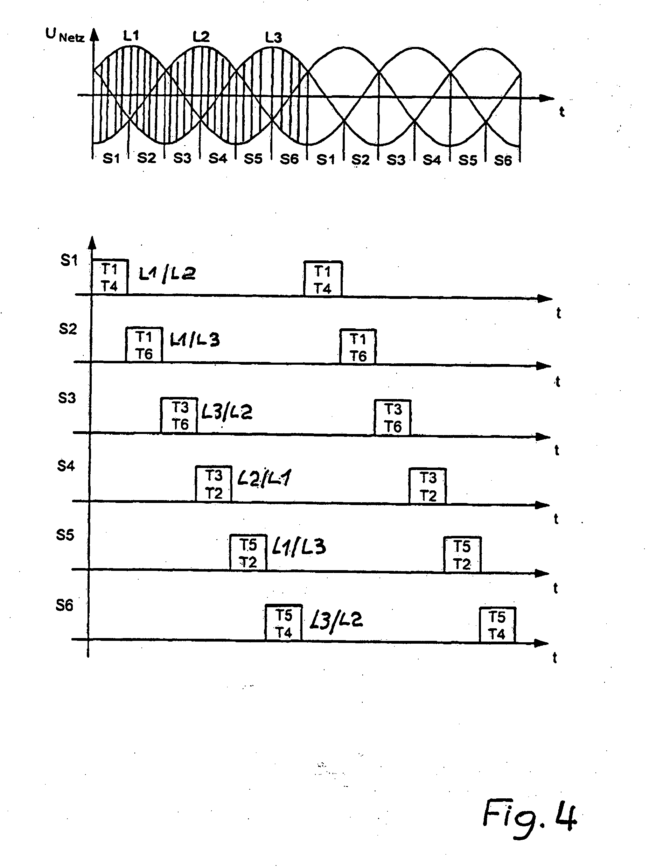

Arbeitet die Last L generatorisch, erfolgt über den Gleichspannungszwischenkreis U_{Z+}, U_{Z-} und den NetzWechselrichter WR eine Rückspeisung in das Drehspannungsnetz. Dazu erfasst das Steuerteil St, ob die Gleichspannung im Zwischenkreis U_{Z+}, U_{Z-} einen Referenzwert übersteigt, der höher ist als der Wert derjenigen Spannung, die sich im Gleichspannungszwischenkreis im Leerlauf einstellt, also bei fehlender Last L. Diese Leerlauf-Spannung entspricht den Scheitelwerten der verketteten Netzspannungen zwischen den Netzphasen L1, L2 und L3. Für die Ansteuerung der elektronischen Schalter wird außerdem ermittelt, welche Netzphasen jeweils die größte Gegenspannung zur Verfügung stellen, die in der Darstellung von Figur 4 oben durch eine Schraffur zwischen den Spannungsverläufen kenntlich gemacht ist. Dies erfordert bei einem Drehspannungsnetz mit drei Phasen die gesamte Netzspannungsperiode von 360° in sechs Sektoren S1 - S6 von jeweils 60° aufzuteilen, innerhalb derer die elektronischen Schalter T1 - T6 des Wechselrichters WR paarweise im Wechsel so zu aktivieren sind, dass die Gleichspannung im Gleichspannungszwischenkreis immer auf die höchstmögliche Gegenspannung im Drehspannungsnetz aufgeschaltet wird.

In Figur 4 unten sind für die Sektoren S1 - S6 jeweils die beiden elektronischen Schalter T1 - T6 angegeben, die innerhalb des jeweiligen Sektors aktiviert werden. Für die erste Netzspannungsperiode, nach der sich die Schaltungsvorgänge wiederholen, sind noch diejenigen Netzphasen L1 - L3 neben den Schalterpaarungen hinzugesetzt, welche die höchste Gegenspannung zur Verfügung stellen.

Figur 3 zeigt die augenblicklichen Rückspeise-Strompfade, die der Netzstrom IN durch den Wechselrichter WR nimmt, wenn die elektronischen Schalter T1 und T4 aktiviert sind. Wichtig hierbei ist, dass die zwei Schalter T1-T4, T1-T6, T3-T6, T3-T2, T5-T2 und T5-T4 des jeweiligen Sektors stets gleichzeitig aktiviert und auch wieder deaktiviert werden. Die Aktivierungsdauer dieser elektronischen Schalter T1 - T6 kann innerhalb des jeweiligen Sektors S1 - S6 variiert werden, da die IGBTs eingeschaltet werden, wenn die Zwischenkreisspannung den Referenzwert überschreitet und wieder ausgeschaltet werden, wenn der Referenzwert wieder unterschritten wird. Befindet sich die Zwischenkreisspannung gegen Ende des Sektors S1 - S6 noch oberhalb des Referenzwertes, werden die beiden stromführenden elektronischen Schalter so rechtzeitig deaktiviert, dass der Rückspeisestrom noch vor dem Beginn des neuen Sektors abgebaut ist. Zur Vermeidung von Schaltverlusten ist es zudem zweckmäßig, innerhalb jedes der Sektoren S1 - S6 die jeweilige Paarung aus den elektronischen Schaltern T1 - T6 nur ein einziges Mal zu aktivieren und zu deaktivieren.

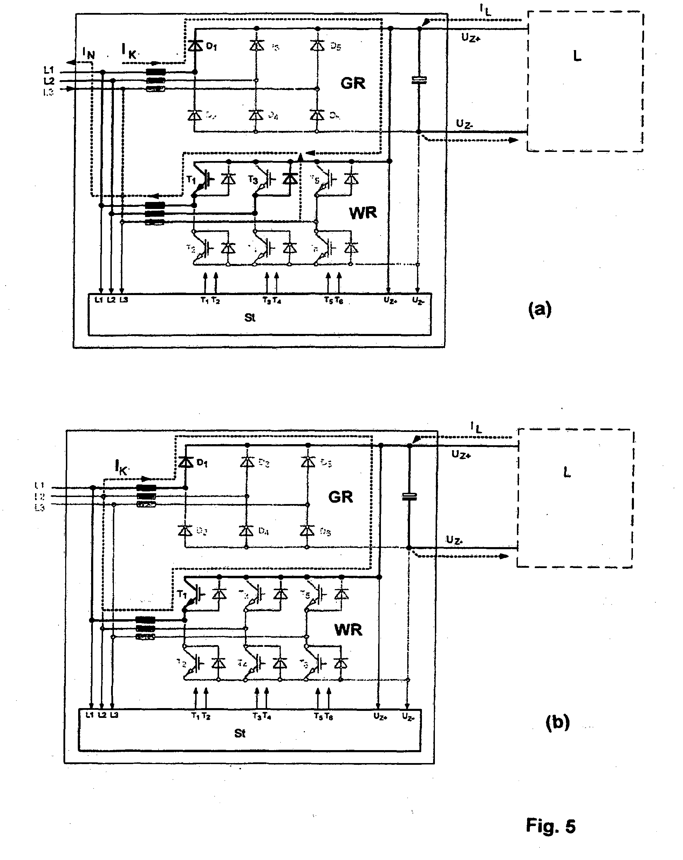

Zur Veranschaulichung der bei nicht gleichzeitigem Ausschalten der elektronischen Schalter des Wechselrichters WR im Rückspeisebetrieb entstehenden parasitären Kreisströme und der damit verbundenen Leistungsverluste zeigen die Fig. 5 (a) und Fig. 5 (b) das Entstehen solcher Kreisströme am Beispiel der vorliegenden Versorgungseinheit. Solch ein nicht gleichzeitiges Ausschalten der elektronischen Schalter findet sich beispielsweise bei herkömmlichen Ansteuerverfahren mit 120°-Blockbetrieb.

Im vorliegenden Beispiel der Fig. 5(a) waren die elektronischen Schalter T1 und T4 gemeinsam eingeschaltet (s. Fig. 3), aber der elektronischen Schalter T1 wurde nicht gleichzeitig mit dem elektronischen Schalter T4 wieder ausgeschaltet. Zum Abbau des Netzstromes IN fließt der Strom dann weiterhin über den elektronischen Schalter T1 und die Freilaufdiode des Schalters T3. Dadurch erfährt der Zwischenkreis einen negativen Potentialsprung, durch den die Diode D1 des Gleichrichters GR leitend wird. Es baut sich über D1 ein Kreisstrom I_{K} auf. Außerdem wird der Strom in der Diode von T3 schneller abgebaut, als der Strom im Transistor von T1.

In dem Moment, in dem die Diode in T3 stromlos wird, ist der Netzstrom in L1 und L2 vollständig abgebaut. Es bleibt ein Kreisstrom I_{K} bestehen, der Verluste in den von ihm durchflossenen Symmetriergliedern und Halbleitern zur Folge hat. Den Kreisstrompfad zeigt die Fig. 5(b).

Da das erfindungsgemäße Verfahren vorsieht, die gemeinsam eingeschalteten Symmetrierglieder im Rückspeisebetrieb zeitlich im Wechsel zu aktivieren und sie gleichzeitig auszuschalten, können keine solchen parasitären Kreisströme entstehen.

Die erfindungsgemäße Versorgungseinheit lässt sich mit dem erfindungsgemäßen Verfahren daher so betreiben, dass ein Verhältnis der zur Verfügung gestellten motorischen Leistung zur erzeugten generatorischen Leistung von im Wesentlichen 2/1 erreichbar ist.

## Patentansprüche

1. Versorgungseinheit für elektrische Antriebe mit einem Drehspannungsnetzeingang und einem Gleichspannungsausgang zur Einspeisung in einen kapazitiven Gleichspannungszwischenkreis bei motorischer Last und Rückspeisung in das Drehspannungsnetz bei generatorischem Betrieb der Last (L) am Gleichspannungskreis mit einem Netzwechselrichter (WR) mit in Abhängigkeit von den verläufen der verketteten Netzwechselspannungen gesteuerten elektronischen Schaltern (T1...T6) und dazu antiparallelen Freilaufdioden (D7...D12), die im Einspeisebetrieb als Brückengleichrichter genutzt werden, wobei parallel zum Netzwechselrichter (WR) ein Netzgleichrichter (GR) angeordnet ist, wobei am Netzausgang des Netzwechselrichters (WR) sowie am Netzeingang des Netzgleichrichters (GR) Symmetrierglieder (x1...x6) für den Einspeisebetrieb gleichzeitig über den Netzwechselrichter (WR) sowie den Netzgleichrichter (GR) angeordnet sind, wobei die Symmetrierglieder (x1...x6) so ausgelegt sind, dass im Einspeisebetrieb die netzseitig dem Netzgleichrichter (GR) und dem Netzwechselrichter (WR) jeweils zur Verfügung gestellte Leistung der Leistung entspricht, die der Netzgleichrichter (GR) und der Netzwechselrichter (WR) jeweils aufnehmen können,
**dadurch gekennzeichnet,**
**dass** der Netzgleichrichter (GR) mit seinem Gleichspannungsausgang ohne Zwischenglieder an dem Gleichspannungsanschluss des Netzwechselrichters (WR) angeschlossen ist, und dass die Symmetrierglieder (x1...x6) weiter so ausgelegt sind, dass im Einspeisebetrieb sowohl über den Netzgleichrichter (GR) als auch über die Freilauf-dioden (D7...D12) des Netzwechselrichters (WR) Leistung in den Gleichspannungszwischenkreis eingespeist wird.

2. Versorgungseinheit nach Anspruch 1,
**dadurch gekennzeichnet,**
**dass** die Symmetrierglieder am Netzeingang des Netzgleichrichters und am Netzausgang des Netzwechselrichters Netzdrosseln sind.

3. Versorgungseinheit nach Anspruch 1 oder 2,
**dadurch gekennzeichnet,**
**dass** die Symmetrierglieder bezogen auf den Einspeisebetrieb für eine der Strombelastbarkeit der Dioden des Gleichrichters und des Wechselrichters passende Stromaufteilung und bezogen auf den Rückspeisebetrieb für einen für die elektronischen Schalter des Wechselrichters verträglichen Stromanstieg ausgelegt sind.

4. Versorgungseinheit nach einem der Ansprüche 1 - 3,
**dadurch gekennzeichnet,**
**dass** zwei oder mehrere Netzgleichrichter in paralleler Anordnung zum Wechselrichter vorgesehen sind.

5. Versorgungseinheit nach Anspruch 4,
**dadurch gekennzeichnet,**
**dass** am Netzeingang jedes Netzgleichrichters jeweils ein Symmetrierglied vorgesehen ist, welches an die Leistungsaufnahme des Netzgleichrichters angepasst ist.

6. Verfahren zum Steuern einer Versorgungseinheit für elektrische Antriebe mit einem Drehspannungsnetzeingang und einem Gleichspannungsausgan zur Einspeisung in einen kapazitiven Gleichspannungszwischenkreis bei motorischer Last und Rückspeisung in das Drehspannungsnetz bei generatorischem Betrieb der Last (L) am Gleichspannungszwischenkreis mit einem Netzwechselrichter (WR) mit in Abhängigkeit von den Verläufen der verketteten Netzwechselspannungen gesteuerten elektronischen Schaltern (T1...T6) und dazu antiparallelen Freilaufdioden (D7...D12), die im Einspeisebetrieb als Brückengleichrichter genutzt werden, wobei parallel zum Netzwechselrichter ein Netzgleichrichter angeordnet ist, wobei die elektronischen Schalter (T1...T6) des Netzwechselrichters (WR) im Einspeisebetrieb deaktiviert und im Rückspeisebetrieb paarweise zeitlich im Wechsel solange aktiviert sind, wie die Gleichspannung im Gleichspannungszwischenkreis einen Referenzwert übersteigt, der höher als die sich im Leerlauf Gleichspannungszwischenkreis ist,
**dadurch gekennzeichnet,**
**dass** der Netzgleichrichter (GR) mit seinem Gleichspannungsausgang ohne Zwischengliedes an dem Gleichspannungsanschluss des Netzwechselrichters (WR) angeschlossen ist, wobei im Einspeisebetrieb sowohl über den Netzgleichrichter (GR) als auch über die Freilaufdioden (D7...D12) des Netzwechselrichters (WR) Leistung in den Gleichspannungskreis eingespeist wird.

7. Verfahren nach Anspruch 6,
**dadurch gekennzeichnet,**
**dass** bei einem netzseitig symmetrischen Drehspannungssystem die 360° der Netzspannungsperiode in eine der doppelten Anzahl der Netzphasen entsprechende Anzahl von Sektoren aufgeteilt wird und in jedem dieser Sektoren die beiden elektronischen Schalter des Netzwechselrichters zeitgleich aktiviert werden, die denjenigen zwei Phasen des Drehspannungsnetzes zugeordnet sind, die jeweils augenblicklich die maximale Gegenspannung aus dem Drehspannungsnetz zur Verfügung stellen.

8. Verfahren nach Anspruch 7,
**dadurch gekennzeichnet,**
**dass** die elektronischen Schalter des Netzwechselrichters zeitgleich dann deaktiviert werden, wenn die Gleichspannung im Zwischenkreis auf den Referenzwert abgesunken oder das Ende des zugeordneten Sektors erreicht ist.

9. Verfahren nach Anspruch 8,
**dadurch gekennzeichnet,**
**dass** die elektronischen Schalter des Netzwechselrichters zeitgleich so deaktiviert werden, dass der Rückspeisestrom vor einem Sektorübergang abgebaut ist.

## Claims

1. Supply unit for electric drives with a three-phase voltage input and a d.c. voltage output for feeding into a capacitive d.c. voltage intermediate circuit in the event of motorized load and feeding back into the three-phase voltage network in the event of generator operation of the load (L) at the d.c. voltage circuit with a mains inverter (WR) with electronic switches (T1... T6) controlled in dependence on the paths of the linked mains a.c. voltages, and freewheeling diodes (D7... D12) which are antiparallel thereto and which are used in the feed operation as bridge rectifiers wherein a mains rectifier (GR) is arranged parallel to the mains inverter (WR), wherein at the mains output of the mains inverter (WR) as well as at the mains input of the mains rectifier (GR) there are balancing units (x1...x6) for the infeed operation simultaneously via the mains inverter (WR) as well as the mains rectifier (GR), wherein the balancing units (x1... x6) are designed so that during infeed operation the power available each time on the mains side for the mains rectifier (GR) and the mains inverter (WR) corresponds to the power which can be received by the mains rectifier (GR) and the mains inverter (WR), **characterised in that** the mains rectifier (GR) is connected with its d.c. voltage output without intermediate members to the d.c. voltage connection of the mains inverter (WR), and that the balancing units (x1...x6) are further designed so that during the infeed operation power is fed into the d.c.voltage intermediate circuit via both the mains rectifier (GR) and via the freewheeling diodes (D7...D12) of the mains inverter (WR).

2. Supply unit according to claim 1 **characterised in that** the balancing units at the mains input of the mains rectifier and at the mains output of the mains inverter are power chokes.

3. Supply unit according to claim 1 or 2 **characterised in that** the balancing units with regard to the infeed operation are designed for a current split adapting to the load capacity of the diodes of the rectifier and inverter, and in relation to the return feed are designed for a current rise compatible for the electronic switches of the inverter.

4. Supply unit according to one of claims 1 to 3 **characterised in that** two or more mains rectifiers are provided in parallel arrangement with the inverter.

5. Supply unit according to claim 4 **characterised in that** a balancing unit is provided at the mains input of each mains rectifier and is adapted to the power take-up of the mains rectifier.

6. Method for controlling a supply unit for electric drives with a three-phase voltage input and a d.c. voltage output for feeding into a capacitive d.c. voltage intermediate circuit in the event of motorized load and feeding back into the three-phase voltage network in the event of generator operation of the load (L) at the d.c. voltage circuit with a mains inverter (WR) with electronic switches (T1... T6) controlled in dependence on the paths of the linked mains a.c. voltages, and freewheeling diodes (D7... D12) which are anti-parallel thereto and which are used in the feed operation as bridge rectifiers wherein a mains rectifier is arranged parallel to the mains inverter, wherein the electronic switches (T1 ...T6) of the mains inverter (WR) are deactivated in feed operation and are activated in return feed operation in pairs temporarily during the switch-over for as long as the direct current voltage in the d.c. voltage intermediate circuit exceeds a reference value which is higher than the d.c.voltage intermediate circuit voltage which is set during idling, **characterised in that** the mains rectifier (GR) is connected with its d.c. voltage output without intermediate members to the d.c. voltage connection of the mains inverter (WR), wherein in the feed operation power is fed into the d.c. voltage circuit both via the mains rectifier (GR) and also via the freewheeling diodes (D7... D12) of the mains inverter (WR).

7. Method according to claim 6 **characterised in that** in the case of a symmetrical three-phase voltage system on the mains side the 360 ° of the mains voltage periods are split into a number of sectors corresponding to double the number of mains phases, and in each of these sectors the two electronic switches of the mains inverter are active simultaneously which are assigned to those two phases of the three-phase voltage network which are each momentarily provided with the maximum counter-voltage from the three-phase voltage network.

8. Method according to claim 7 **characterised in that** the electronic switches of the mains inverter are then deactivated simultaneously when the d.c. voltage in the intermediate circuit is lowered to the reference value or the end of the associated sector is reached.

9. Method according to claim 8 **characterised in that** the electronic switches of the mains inverter are deactivated simultaneously so that the return feed current is broken down prior to a sector change-over.

## Revendications

1. Unité d'alimentation pour entraînements électriques avec une entrée de réseau de tension alternative et une sortie de tension continue pour l'injection dans un circuit intermédiaire de tension continue capacitif avec charge motrice et récupération dans le réseau de tension alternative avec charge génératorique (L) sur le circuit de tension continue, avec un onduleur réseau (WR), avec des commutateurs électroniques (T1...T6) commandés en fonction des mises en oeuvre des tensions alternatives réseau enchaînées, avec, de plus, des diodes de roue libre (D7...D12) antiparallèles, qui sont utilisées en fonctionnement injection, en tant que redresseur en pont, sachant qu'un redresseur réseau (GR) est aménagé parallèlement à l'onduleur réseau (WR), sachant que des organes de symétrie (x1...x6) sont disposés à la sortie réseau de l'onduleur réseau (WR) ainsi qu'à l'entrée réseau du redresseur (GR), pour le fonctionnement injection, simultanément par l'intermédiaire du l'onduleur réseau (WR) et du redresseur réseau (GR), sachant que les organes de symétrie (x1...x6) sont de conception telle que la puissance, mise, côté réseau, à la disposition du redresseur réseau (GR) et de l'onduleur réseau (WR), corresponde à la puissance pouvant être respectivement consommée par le redresseur réseau (GR) et l'onduleur réseau (WR),
**caractérisée en ce que**
le redresseur (GR) est raccordé, sans organes intermédiaire, au raccord tension continue de l'onduleur (WR) et que les organes de symétrie (x1...x6) sont, de plus, aménagés de telle manière que, en fonctionnement injection, la puissance soit injectée dans le circuit intermédiaire de tension continue aussi bien par l'intermédiaire du redresseur (GR) que par l'intermédiaire des diodes de roue libre (D7...D12).

2. Unité d'alimentation selon la revendication 1,
**caractérisée en ce que**
les organes de symétrie à l'entrée réseau du redresseur et à la sortie réseau de l'onduleur sont des bobines de réactance de réseau.

3. Unité d'alimentation selon revendication 1 ou 2,
**caractérisée en ce que**
les organes de symétrie sont prévus pour une répartition de courant adaptée à la capacité de charge des diodes du redresseur et de l'onduleur, en ce qui concerne le fonctionnement injection, et pour une montée de courant compatible avec les commutateurs électroniques du redresseur, en ce qui concerne au fonctionnement récupération.

4. Unité d'alimentation selon l'une des revendications 1 à 3,
**caractérisée en ce que**
deux ou plusieurs redresseurs sont prévus en agencement parallèle à l'onduleur.

5. Unité d'alimentation selon la revendication 4,
**caractérisée en ce que**,
à l'entrée réseau de chaque redresseur est prévu un organe de symétrie qui est adapté aux besoins de puissance du redresseur.

6. Procédé de commande d'une unité d'alimentation pour entraînements électriques avec une entrée de réseau de tension alternative et une sortie de tension continue pour l'injection dans un circuit intermédiaire de tension continue capacitif avec charge motrice et récupération dans le réseau de tension alternative avec charge génératorique (L) sur le circuit de tension continue, avec un onduleur réseau (WR), avec des commutateurs électroniques (T1...T6) commandés en fonction des mises en oeuvre des tensions alternatives réseau enchaînées, avec, de plus, des diodes de roue libre (D7...D12) antiparallèles, qui sont utilisées en fonctionnement injection, en tant que redresseur en pont, sachant qu'un redresseur réseau (GR) est aménagé parallèlement à l'onduleur réseau (WR), sachant que les commutateurs électroniques (T1...T6) de l'onduleur (WR) sont désactivés en fonctionnement injection et activés alternativement, deux à deux, en fonctionnement récupération tant que les la tension continue dépasse, dans le circuit intermédiaire de tension continue, une valeur de référence qui est plus élevée que la tension du circuit intermédiaire de tension continue en marche à vide,
**caractérisé en ce que**
le redresseur (GR) est raccordé, sans organes intermédiaire, au raccord tension continue de l'onduleur (WR), sachant que, en fonctionnement injection, la puissance est injectée dans le circuit intermédiaire de tension continue aussi bien par l'intermédiaire du redresseur (GR) que par l'intermédiaire des diodes de roue libre (D7...D12).

7. Procédé selon la revendication 8,
**caractérisé en ce que**,
dans un système symétrique de tension alternative, côté réseau, les 360 ° de la période de tension de réseau sont divisés en un nombre de secteurs qui correspond au double du nombre des phases de réseau, et que, dans chacun de ces secteurs, les deux commutateurs électroniques de l'onduleur, qui sont associés aux deux phases du réseau de tension alternative sont activés en même temps, mettant respectivement immédiatement la contre tension maximale à partir du réseau de tension alternative.

8. Procédé selon la revendication 7,
**Caractérisé en ce que**
les commutateurs électroniques de l'onduleur sont désactivés en même temps quand la tension continue est descendue à la valeur de référence dans le circuit intermédiaire ou que la fin du secteur associé est atteinte.

9. Procédé selon la revendication 8,
**caractérisé en ce que**
les commutateurs électroniques de l'onduleur sont désactivés en même temps de sorte que le courant de récupération est annulé avant une sortie de secteur.
